# EUROPÄISCHE PATENTANMELDUNG

(11) **EP 2 290 020 A1**
(43) Veröffentlichungstag der Anmeldung: **02.03.2011**
(21) Anmeldenummer: 10170207.4
(22) Anmeldetag: 20.07.2010
(51) Int. Cl.: C09D 5/00, F16C 33/20

(54) **Gleitbeschichtung**

(30) Priorität: 24.08.2009 EP 09168470
(71) Anmelder: AHC-Oberflächentechnik GmbH, 50171 Kerpen (DE)
(72) Erfinder: Brake, Wilfried, 52391, Vettweiß (DE); Dröse, Nico, 51379, Leverkusen (DE)
(74) Vertreter: Dunkelberg, Oliver Thomas Michael

(57) **Zusammenfassung**

Gleitbeschichtung zur geräuschdämpfenden und reibungskoeffizientenmindernden Beschichtung, wobei die Gleitbeschichtung aus einer Gleitlackschicht mit darin eingebetteten Flockfasern besteht und die Gleitlackschicht unter Reibpaarung kontinuierlich Schmierstoffe freisetzt sowie deren Verwendung.

## Beschreibung

Die vorliegende Erfindung betrifft eine geräuschmindernde Gleitbeschichtung, deren Verwendung sowie ein Verfahren zu ihrer Herstellung.

Gleitbeschichtungen werden eingesetzt, um in einem tribologischen System den Reibungskoeffizienten zu reduzieren. Unter einem "tribologischen System" wird hier und im Folgenden in Anlehnung an die DIN 50323 ein System von aufeinander einwirkenden Oberflächen in Relativbewegung verstanden.

Der Reibungskoeffizient, auch Reibungszahl genannt, ist ein Maß dafür, wie groß die während einer Reibung zwischen zwei Festkörpern wirkenden Kräfte sind (auch Reibungskraft genannt).

Mit dem Begriff "Reibung" wird das Verhalten sich zueinander bewegender Oberflächen beschrieben. Hierbei gibt es mehrere gleichzeitig Einfluss nehmende Parameter. Wechselwirkungen der Feststoffteilchen in der Oberfläche, die Mechanik der Oberflächenstrukturen, die Adhäsion der Oberflächen und das Deformationsverhalten der Strukturen. Das Gleiten eines Festkörpers entlang eines anderen kann einerseits durch molekulare Anziehungskräfte (Adhäsion) der Kontaktflächen oder ihre mechanische Verklammerung (ähnlich dem Feilen) behindert werden.

Die Angabe eines Reibungskoeffizienten setzt voraus, dass die Art der Reibung als Coulombsche Reibung betrachtet wird, d.h. es gibt einen Wert für die Haftreibung (wenn keine Relativbewegung zwischen den Reibflächen besteht) und einen Wert für die Gleitreibung, wenn sich die Flächen relativ zueinander bewegen. Die Gleitreibung (auch kinetische Reibungskraft) Rk ist die Widerstandskraft, die nach dem Überwinden der Haftung (Haftreibung) wirkt. Der Gleitreibungswert ist dabei unabhängig von der Gleitgeschwindigkeit und damit konstant.

Bei örtlich unterschiedlichen Gleitreibungszahlen kann es zu Stotterbewegungen, dem sogenannten "Stick-Slip-Effect" (v. engl. stick "haften" und slip "gleiten"), kommen. Dabei üben gedämpft gekoppelte Oberflächenteile eine schnelle Bewegungsfolge aus Haften, Verspannen, Trennen und Abgleiten aus.

Eine Verringerung des Reibungskoeffizienten in einem tribologischen System ist Gegenstand einer Vielzahl von Veröffentlichungen.

In der Vergangenheit wurde der Reibungskoeffizient beispielsweise durch die Verwendung von Schmierstoffen oder Ölen (traditionelle Schmierung) verringert.

Problematisch ist eine solche Schmierung immer dann, wenn es zu einer Wechselwirkung zwischen den Oberflächen und dem Schmierstoff kommen kann. Beispielsweise gibt es eine Vielzahl von Kunststoffoberflächen, die unter Verwendung traditioneller Schmierstoffe, wie Fette oder Öle, zum Quellen oder Anlösen neigen oder auch sich vollständig zersetzen. Inwieweit diese Erscheinungen auftreten, ist nicht nur von der Reibpaarung und dem Schmierstoff, sondern vom gesamten Tribosystem abhängig. Darüber hinaus stören die traditionell als Gleitmittel verwendeten Fette und Öle dem Recyclingprozess erheblich.

Um diesen Nachteil zu beheben, wurden technische Oberflächen mit einer sogenannten "inkorporierten Schmierung" entwickelt. Solche Oberflächen beinhalten das Einbringen eines Schmierstoffs in den Kunststoff. Möglich ist die Einarbeitung fester (z. B. PE, PTFE und MoS2) und/oder flüssiger (hochwärmebeständige Öle) Schmierstoffe. Weiterhin ist eine chemische Schmierung mit Additiven möglich. Allerdings existiert bei Beginn einer Relativbewegung zwischen Grund- und Gegenkörper mit einer solchen inkorporierten Schmierung kein Schmierfilm. Dieser bildet sich erst infolge einer Relativbewegung beider Körper aus. Folglich ist während der Einlaufphase mit einem erhöhten Verschleiß zu rechnen. Solange der freigelegte Schmierstoff ausreicht, wird kein weiterer (inkorporierter) Schmierstoff durch Verschleiß freigesetzt. Dieser Mechanismus wiederholt sich bei ausreichendem Schmierstoffangebot.

Eine weitere Entwicklung auf dem Gebiet der tribologischen Systeme mit verringertem Reibungskoeffizienten ist die Schmierung mit festen Schichten. Hier hat vor allem die Gleitlackbeschichtung an Bedeutung gewonnen.

Allerdings ergeben sich aus der Benutzung eines Bindemittels für die Fixierung der Partikel von Festschmierstoffen im Gleitlack technische Nachteile. Zum Einen haben alle Bindersysteme den Nachteil, dass eine enge Toleranz bezüglich der Schichtdicke nicht gewährleistet wird. Bei einer Schichtdicke von typischerweise 15 bis 50 µm beträgt die Streuung der Schichtdicke etwa 5 - 10 µm. Andererseits werden die Bindersysteme aufgrund ihrer eigenen geringen Verschleißfestigkeit bei mechanischer Beanspruchung oder bei adhäsiver Beanspruchung relativ leicht abgetragen. Zunächst führt dieser Vorgang zu einer Geometrieveränderung des Beschichtungssystems und später, nach komplettem Abtrag des Bindersystems, auch zum Funktionsverlust der Beschichtung.

Diese Gleitlacke haben darüber hinaus den Nachteil, dass insbesondere bei mechanischen Beanspruchungen der Gleitpartner senkrecht zur Gleitebene (z.B. durch Schlagen oder Ziehen), insbesondere bei beschichteten Metallgegenständen, die entstehenden Geräusche weder verhindert noch gedämpft werden. Auch bieten solche Beschichtungen keinen Toleranzausgleich für die Gleitpartner, so dass nach anderen geräuschdämmenden technischen Beschichtungen für Gleitpartner gesucht wurde.

Zum Ausgleich von unterschiedlichen oder variierenden Toleranzen bei Gleitpartnern ist es bekannt, Bürstenbänder bzw. Bürstendichtungen zu verwenden. Beispielsweise ist aus der DE 296 01 756 U1 der Einsatz einer Bürstendichtung bei einer Glasschiebetür zur Geräuschminderung bekannt. Solche Bürstendichtungen haben aber den Nachteil, dass diese den Reibungskoeffizienten der Gleitpartner keinesfalls verringern, sondern eher erhöhen, insbesondere bei dicht gepackten Bürstendichtungen.

Auf der Suche nach reibungsmindernden und gleichzeitig geräuschdämmenden technischen Beschichtungen wurden solche entwickelt, bei denen einer der Gleitpartner eine Beflockung aufweist.

Beflockungen an sich sind insbesondere aus dem Textilbereich bekannt und dienen vornehmlich der optischen und haptischen Veredlung von Substraten. Zur Herstellung einer Beflockung wird auf das zu beflockende Substrat zunächst eine Klebstoffschicht aufgebracht, etwa durch Siebdruck, Spritzpistole oder Tauchbad. Dann werden die Fasern elektrostatisch auf den nicht ausgehärteten oder getrockneten Klebstoff appliziert. Dazu werden die Fasern in den Applikator gegeben, der aus einer Kunststoffkammer besteht, in die der Flock eingefüllt wird, und aus deren Öffnung der Flock austreten kann, wobei durch eine geeignete Vorrichtung (z.B. Kunststoffsieb) ein unkontrolliertes Herausfallen der Fasern verhindert wird. Auf der Gegenseite der Öffnung der Kunststoffkammer ist innen eine Metallplatte als Anode angebracht. Die Kathode bildet das Substrat bzw. den Klebstoff. Der Applikator wird mit der Öffnung zum Substrat gehalten und eine Spannung angelegt. Durch den entstehenden elektrostatischen Effekt schießen die Flockfasern in den Klebstoff hinein und werden dort fixiert. Die elektrostatische Ladung stellt sicher, dass alle Fasern senkrecht im Klebstoff stecken, da nur so die typische samtartige bis borstige Konsistenz zustande kommt.

Beispielsweise ist aus der DE 100 16 351 A1 der Einsatz einer technischen Beflockung auf reibschlüssigen Triebriemen bekannt, die in Riementrieben eine Geräuschentwicklung verhindern oder vermindern. Auch wird der Riemen an seinem bewegungsübertragenden Teil der Oberfläche mit den Fasern beflockt, um zu verhindern, dass sich bei diesem Teil der Oberfläche unterschiedliche Reibverhältnisse mit daraus resultierenden Geräuschen akustisch besonders stark bemerkbar machen (Quietschen).

Ferner ist in der DE 100 16 351 A1 offenbart, den Abrieb und damit die Lebensdauer, das Reibverhalten und auch das Geräuschverhalten zusätzlich durch eine äußere Beschichtung mit Fluorpolymeren positiv zu beeinflussen, wobei die Fasern nur mit einer Teillänge jeder einzelnen Faser in diese Polymerschicht eingebunden sind.

Eine solche Beschichtung hat aber den Nachteil, dass die Beschichtung der Flockfasern mit Fluorpolymeren nach der Beflockung besonders das Gleitverhalten der Faseroberflächen beeinflussen und äußerst inert und abriebbeständig sind. Allerdings führt der Zusatz von Fluorpolymeren in nicht fluorierte Polymere zu einer deutlich verringerten Haftung der Fasern, so dass die DE 100 16 351 A1 vorschlägt, zur verbesserten Anhaftung Copolymere oder Terpolymere von Fluorpolymeren zu verwenden.

Darüber hinaus offenbart die DE 100 16 351 A1 nicht die Verwendung von Flockfasern oder fluorpolymerhaltigen Zwischenschichten bei Gleitlagerschichten.

Ein Nachteil von Flockfasern bei reibwertmindernden Beschichtungen ist in der DE 31 24 444 A1 erwähnt. Demnach kann die Flockendichte bei solchen Beschichtungen so groß sein, dass der Formänderungswiderstand der Flocken gegen den Zahneingriff erhebliche Beträge annimmt, so dass auch hieraus Schwergängigkeit resultiert. Schließlich wiesen diese Beschichtungen den unerwünschte Effekt der "Zahnfühligkeit" auf, nämlich ein an der Bedienungskurbel für das Schiebefenster bzw. für das Schiebedach merklich und störend fühlbarer rubbelnder Eingriff zwischen Antriebsritzel und Antriebskabel (der sogenannten "Stick-Slip-Effect").

Zur Lösung dieser Probleme schlägt die DE 31 24 444 A1 eine reibungs- und geräuschmindernde Zwischenschicht aus einem Polymerschaum - ohne Flockfasern - vor.

Aus der DE 25 53 549 C3 ist eine Gleitbacke für Schiebedächer vorbekannt, bei der ein Gleitbackenkörper an drei Seiten im Bereich seiner Gleitflächen mit einer reibungsmindernden Auflage in Form einer aufkaschierten Folie aus gleitfähigem PTEE oder einer Beschichtung oder Beflockung aus einem reibungsarmen Material, wie Polyamid, versehen. Gummigleitbacken mit aufkaschierter PTEE-Folie sind schwierig herzustellen. Gummigleitbacken mit einer Beschichtung oder Beflockung aus reibungsarmem Material haben relativ raue Gleitflächen, und müssen zur Erniedrigung des Reibungskoeffizienten mit Schmierstoffen versehen werden. Gleichwohl sind insbesondere bei höheren Temperaturen (60° C und mehr) und bei Querbeschleunigungen (Kurvenfahrt) Knarzgeräusche nicht auszuschließen.

Um diesen Nachteil zu beheben, schlägt die DE 39 20 372 C1 vor, einen Gleitbackenkörper aus Weichgummi mit einer darauf aufgebrachten Gleitkappe aus Kunststoff - ohne Beflockung - einzusetzen.

Ein anderes Gleitlager aus thermoplastischen Kunststoff ist aus der DE 26 39 735 A1 bekannt, bei dem die Lagerplatte untereinander verbundene Vertiefungen aufweist. Diese Vertiefungen können bürstenartige Faserbetten aufweisen. Diese Faserbetten können außer als Abstreifer zusätzlich als eine Art Dochtschmierung dienen, wenn sie mit einem Schmiermittel getränkt werden. Hierbei tritt die Druckschmierung automatisch ein, indem bei Belastung zumindest in der Anfangsphase der Gleitbewegung der Schmierstoff - bedingt durch die Kriechneigung des Kunststoffs - aus den Vertiefungen heraus auf die Gleitfläche gedrückt wird. Die bürstenartigen Faserbetten werden vorzugsweise auf an sich bekannte Art durch isostatische Beflockung hergestellt.

Ein weiteres Problem bei geräuschdämmenden Dichtungen besteht bei Elastomer-Bauteilen, die in Kontakt mit verschiedenen Oberflächen anderer Werkstücke stehen, da diese häufig eine starke Neigung zum Quietschen oder Knarzen (Stick-Slip-Effekt) haben, wenn es zur Relativbewegungen zwischen den beiden Reibpartnern kommt. Der Effekt kann an Türdichtungen auftreten, deren Dichtbereich bzw. -lippe mit einer lackierten Gegenfläche zusammenwirkt aber auch an anderen Bauteilen, beispielsweise an Innenausstattungsteilen oder an Fahrwerksteilen.

Eine Möglichkeit, dem Problem zu begegnen, ist eine Flock-Beschichtung oder eine Beschichtung mit einem Gleitlack oder einer sogenannten Trennfolie. Die bekannten Methoden bedingen einen höheren Aufwand, sind zum Teil druckempfindlich, zu wenig dauerhaft und auch schmutzempfindlich (Beflockung).

Es ist aus der DE 33 35 150 C1 bekannt, den mit einer Gegenfläche in Kontakt kommenden Bereich eines Dichtungsprofils mit einem Gleitlack zu beschichten, dem kleine kugelförmige Körper beigefügt sind, um nur punktuelle Berührungen der beiden Dichtflächen zu erhalten.

Aufgabe der vorliegenden Erfindung ist die Bereitstellung einer Gleitbeschichtung zur geräuschdämpfenden und reibungskoeffizientenmindernden Beschichtung, die auch nach langer Beanspruchungszeit einen verbesserten Gleiteffekt gegenüber dem Stand der Technik aufweist. Ferner die Bereitstellung eines strukturstabilisierten Faserverbundes, welcher einen frühen Kontakt des Gleitstoffes mit dem Gegenpartner ermöglicht, dadurch dass durch die auf die Struktur einwirkenden Oberflächenlasten eine Transportfunktion durch die Faserstruktur von der Einbettung in die Kontaktzonen gewährleistet wird.

Diese Aufgabe wird gelöst durch eine zur geräuschdämpfenden und reibungskoeffizientenmindernden Beschichtung, bei der die Gleitbeschichtung aus einer Gleitlackschicht mit darin eingebetteten Flockfasern besteht, wobei die Gleitlackschicht unter Reibpaarung kontinuierlich Schmierstoffe freisetzt.

Unter dem Begriff "Freisetzung von Schmierstoffe unter Reibpaarung" wird hier und im Folgenden verstanden, dass die Gleitlackschicht einem kontinuierlichen Verschleiß unterliegt. Das bedeutet, dass sich unter Einsatzbedingungen die Gleitlackschicht sehr langsam abnutzt und dass die in sogenannten "Reservoirs" vorliegenden Schmierstoffe durch den Abrieb von der Gleitlackschicht auf die Flockfasern übertragen werden.

Im Gegensatz zu verschiedenen Gleitlackschichten des Standes der Technik soll der langsame Abrieb der Gleitlackschicht gefördert werden.

Unter dem Begriff "Gleitlack" werden hier und im Folgenden Dispersionen aus Festschmierstoffen in organischen und anorganischen Bindern verstanden. Gelöst sind sie in Wasser oder organischen Lösemitteln. Nach dem Aushärten entsteht ein trockener und fester Schmierfilm (Gleitlackschicht).

Gleitlacke sind als Ergänzung zu herkömmlichen flüssigen und konsistenten Schmierstoffen zu betrachten. Sie sollen u. a. Verschleiß, Reibung, Ruckgleiten und Korrosion vermindern. In einigen Fällen ist es wichtig, die Reibung auf ein bestimmtes und reproduzierbares Niveau zu bringen. Im Automobilbau werden beispielsweise die Dichtprofile im Fensterrahmen mit Gleitlack beschichtet, um ein Ruckgleiten der Seitenfenster bei Auf- oder Abbewegung zu vermeiden (M. Kimmann, "Gleitlacke für Kunststoffe" JOT Journal für Oberflächentechnik, 39 (1999) 9, S. 60-65).

Der Binder ist im Wesentlichen für die Verschleißbeständigkeit, die Temperaturstabilität sowie die Haftfähigkeit des Gleitlacks von Bedeutung. Als Binder werden organische Harze und anorganische Substanzen verwendet. Anorganische Binder, z. B. glasartige Binder und Salze, erlauben hohe Betriebstemperaturen von ca. 550 °C bis 800 ° C. Die Abriebfestigkeit der Gleitlacke mit diesen Bindern ist als sehr gut zu bezeichnen. Organische Binder, z.B. Alkyd-, Epoxyd-, Polyester-, Polyurethan- und Phenolharze, ermöglichen Betriebstemperaturen bis etwa maximal 310 °C. Weitere wichtige Eigenschaften der Binder sind die Haftung, die Stabilität gegenüber chemischen Einflüssen sowie die Härte.

Die Festschmierstoffe bestimmen besonders die Schmiereigenschaften der Gleitlackschicht. Man unterscheidet im Allgemeinen zwischen anorganischen und organischen Festschmierstoffen. Die am häufigsten verwendeten Festschmierstoffe sind MoS₂, PTFE, Grafit sowie anorganische Sulfide (z.B. ZnS). Der Reibungskoeffizient von PTFE ist sowohl im Vakuum als auch unter natürlicher Atmosphäre nahezu konstant und sehr gering. Problematisch ist die geringe zulässige Belastbarkeit von PTFE. Grafit weist bei hoher Luftfeuchte bzw. in Anwesenheit eines flüssigen Mediums ein gutes Schmierverhalten auf. Es ist jedoch für das Vakuum gänzlich ungeeignet. MoS₂ ist hochbelastbar und die gute Schmierwirkung ist hinlänglich bekannt. MoS₂ weist gegenüber den anderen beiden Festschmierstoffen in der Summe ein hohes Maß an Belastbarkeit, hohe Temperaturbeständigkeit und gutes Schmierverhalten auf, es verträgt jedoch keine feuchte Atmosphäre. Ein neuer Festschmierstoff, der polarisierte Grafit, soll die guten Eigenschaften von Grafit und MoS₂ bezüglich Belastbarkeit, Temperaturbeständigkeit und Schmierverhalten vereinen.

Es ist aber auch möglich, als Festschmierstoffe mikroverkapselte flüssige Schmierstoffe zu verwenden, die beispielsweise von Lohnherstellern kundenspezifisch hergestellt werden.

Zur Herstellung einer erfindungsgemäßen Gleitlackschicht wird auf die zu beflockenden Bereiche zunächst ein Gleitlack aufgebracht. Direkt anschließend wird der Flock in den nassen Klebstoff eingeschlossen. Dies geschieht meist mit einem elektrostatischen Handbeflockungsgerät oder einer elektrostatischen Beflockungsanlage. In Spezialfällen werden auch andere Verfahren eingesetzt, z.B. elektrostatisch-pneumatische Flockanlagen für Hohlkörper. Das Teil wird dann an der Luft oder im Ofen getrocknet und zuletzt von überschüssigem Flock gereinigt.

Der Gleitlackauftrag ist vergleichbar mit einer Lackierung und kann mit allen Methoden erfolgen, die auch für Lack üblich sind, d.h. Streichen, Walzen, Spritzen, Rakeln u.ä. Ein Gleitlackauftrag auf Bereiche, die nicht beflockt werden sollen, ist hierbei unter allen Umständen zu vermeiden. Notfalls müssen solche Flächen mit einer Schablone abgedeckt oder mit Klebeband abgeklebt werden. Der Untergrund muss so beschaffen sein, dass der Gleitlack nicht eingesaugt wird. Bei porösen Untergründen (z. B. Holz, Spanplatten etc.) muss deshalb vor dem Klebstoffauftrag eine Grundierung aufgebracht werden, welche die Poren sicher verschließt. Wird dieser Punkt nicht beachtet, dringt der Flockklebstoff während des Trocknungsvorgangs in das Grundmaterial ein und der Flock an der Oberfläche wird nur mangelhaft verankert, d.h. bei der Endreinigung treten kahle Stellen auf.

Nach dem Gleitlackauftrag beginnt der Lack an zu trocknen, auszuhärten und/oder zu vernetzen. Hierbei wird er an der Oberfläche immer zäher, bis sich eine Haut bildet. Bereits wenn die Oberfläche zäher geworden ist, schießen Flockteilchen nicht mehr so tief wie gewünscht ein, d.h. die Beflockung wird nicht mehr abriebbeständig. Die Beflockung ist deshalb nur so lange möglich, wie der Klebstoff an der Oberfläche noch nicht durch Verdunstung von Wasser oder Lösungsmittel zäher geworden ist. Die Zeit, in der die Beflockung abgeschlossen sein muss, wird offene Zeit genannt. Bei der Auswahl eines Flockklebstoffes/Gleitlackes muss deshalb je nach Teilegröße und Beflockungsmethode ein Klebstoff mit entsprechender offener Zeit gewählt werden. Zweikomponentige Systeme fangen unabhängig von der Verdunstung von Wasser oder Lösungsmitteln an, miteinander zu reagieren. Auch hierdurch steigt die Viskosität des Klebstoffes an und eine Beflockung ist nicht mehr möglich. Die Zeit, in der ein zweikomponentiger Klebstoffansatz verarbeitet werden muss, wird Topfzeit genannt.

Um ein den Anforderungen entsprechendes Qualitätsprofil zu erhalten, muss der Flockkleber bestimmte Voraussetzungen erfüllen. Als Grundvoraussetzung gilt, dass der Klebstoff eine gute Adhäsion sowohl zum Trägermaterial als auch zur Flockfaser entwickeln muss. Des weiteren werden in der Regel hohe Trocken- und Nassabriebfestigkeiten, hohe Alterungsund UV-Beständigkeiten sowie gute Beständigkeiten gegenüber Wasser, Wasch- und Reinigungsmitteln, Ölen, Fetten, organischen Lösungsmitteln etc. gefordert. Darüber hinaus sollten die Flock-Klebstoffe leicht zu handhaben sein und sich einfach und problemlos verarbeiten lassen.

Die Auswahl des Klebstoffs richtet sich nach der Beflockungstechnologie, der verwendeten Flockart, den gewünschten Eigenschaften des Fertigproduktes und nicht zuletzt nach der Art des zu beflockenden Trägermaterials.

Für die Beflockung von Gummimaterialien, wie z.B. der insbesondere im Automobilbau (z. B. als Fenster- bzw. Türdichtung) verwendeten Substrate wie Styrol-Butadien- Synthesekautschuk, Chloropren-Kautschuk oder Ethylen-Propylen-Dien-Mischpolymerisaten (EPDM) werden z. B. in organischen Lösungsmitteln gelöste Chloroprenkautschuke als Kleber eingesetzt.

Ebenso finden in organischen Lösungsmitteln gelöste Polyurethanpolymere als Flockkleber für vulkanisierte und unvulkanisierte Gummimaterialien Verwendung (DE 31 45 861 und DE 35 08 995). In den deutschen Offenlegungsschriften DE 33 22 695 und DE 34 00 340 werden Polyurethan- Präpolymere mit endständigen Isocyanatgruppen als Beflockungskleber für unpolare Elastomere beansprucht. Nach den Ausführungen dieser Schriften ist die Verwendung dieser Präpolymere prinzipiell in ungelöster, unverdünnter Form möglich. Aufgrund der besseren Anwendung werden diese Präpolymere jedoch bevorzugt in Form von Lösungen bzw. Dispersionen in organischen Lösungsmitteln eingesetzt.

Bevorzugt werden aus Gründen der Gesundheitsgefährdung sowie vor allen Dingen aufgrund neuer Umweltschutzbestimmungen wässrige Klebstoffsysteme für die Beflockung verwendet.

Es hat sich überraschenderweise gezeigt, dass wässrige Polyurethan- bzw. Polyurethanharnstoff-Dispersionen, deren Polyolkomponente aus einem höhermolekularen Polycaprolactonpolyol allein oder einem Gemisch aus einem höhermolekularen Polycaprolactonpolyol und einem höhermolekularen Polyesterpolyol besteht und deren Polymergerüst freie, gegenüber reaktiven Melaminharz- Vorkondensaten bzw. reaktiven Epoxidharzen reaktive Gruppen aufweist, und die eine geringe Menge eines wasserlöslichen Melaminharz-Vorkondensats bzw. eines wasserlöslichen reaktiven Epoxidharzes enthalten, sich durch eine, mit anderen handelsüblichen Polyurethandispersionen bisher nicht erreichte hervorragende Haftung auf Gummimaterialien und darüber hinaus durch sehr gute Echtheiten, wie z. B. hohe Trockenund Nassabriebfestigkeit sowie Beständigkeit gegenüber Wasser und organischen Lösungsmitteln auszeichnen.

Die Herstellung dieser verwendeten Dispersionen erfolgt nach allgemein bekannten und wie bspw. in G. Oertel, "Polyurethane Handbook", Carl Hanser Verlag (1985), bzw. in D. Dieterich, "Die Angewandte Makromolekulare Chemie", 98, 135-165 (1981), beschriebenen Verfahren unter Verwendung der bereits erwähnten und der an sich bekannten Ausgangsmaterialien des Isocyanat-Polyadditionsverfahrens.

Des Weiteren besonders bevorzugt werden als Bindenmittel für die Herstellung der Gleitlackschicht Polyester- und/oder Polyurethanpolymere bevorzugt.

Dieses Polyesterharz hat in einer weiteren erfindungsgemäßen Form ein mittleres Molekulargewicht von 5.000 bis 10.000, weist genügend Carboxylgruppen auf, die dem Polyesterharz nach einer Neutralisation mit Basen ausreichend wasserverdünnbare Eigenschaften verleihen und enthält funktionelle Gruppen, insbesondere Hydroxyl-Gruppen, durch die das Polyesterharz vernetzungsfähig gemacht wird.

Das Polyesterharz kann allgemein eine OH-Zahl zwischen 20 und 80, insbesondere zwischen 30 und 60 und eine Säurezahl zwischen 10 und 50, insbesondere zwischen 15 und 35, aufweisen.

Seine Glasübergangstemperatur (Tg) kann zwischen -20 und +30 µC liegen.

In einer weiteren Ausführung ist der Polyester insbesondere ein Polykondensationsprodukt eines Diols mit einer Dicarbonsäure in Gegenwart einer mehr als 2 funktionelle Gruppen enthaltenden Komponente.

Das Diol kann aus der Gruppe von 1,6-Hexandiol, Neopentylglykol, 1,4-Dimethylolcyclohexan, Hydroxypivalin-säureneopentylglykolester (HPN), perhydriertem Bisphenol-A, Trimethylolpropan und Trimethylolpropanmonoallylether ausgewählt sein.

Die Dicarbonsäure kann aus der Gruppe von Adipinsäure, Phthalsäure, Isophthalsäure, Hexahydrophthalsäure, Tetrahydrophthalsäure, oder deren möglichen Anhydriden, insbesondere aus der Gruppe der dimeren Fettsäuren, ausgewählt sein.

Die mehr als 2 funktionelle Gruppen enthaltende Komponente kann ein Triol, eine Tricarbonsäure, eine Monohydroxydicarbonsäure, insbesondere eine Dihydroxymonocarbonsäure, vorzugsweise Trimellithsäure, Trimethylolpropan und Dimethylolpropionsäure sein.

Die besten Eigenschaften können mit Bindemitteln erzielt werden, die nach dem Aushärten oder Vernetzen Elastomer-Charakter aufweisen. Das können bestimmte Polyurethane sein, bei denen durch segmentierten Aufbau eine bestimmte Folge von Weich- und Hartsegmenten eingestellt wird. Bevorzugte Bindemittel sind weiche Polyesterharze mit hohem Molekulargewicht und hoher Hydroxyfunktionalität, die durch Polykondensation von Dimerfettsäuren mit Polyalkoholen, vorzugsweise Dialkoholen, erhalten werden und deren Verzweigungsstellen durch trifunktionelle (Hydroxy)carbonsäuren erzeugt werden. Diese Polyesterharze werden auch mit blockierten Polyisocyanaten oder Melaminharzen als Vernetzern eingesetzt.

Unter dem Begriff Lösemittel versteht man hier und im Folgenden solche organischen Stoffe, die andere auf physikalischem Wege in Lösung bringen kann wie beispielsweise niedere Alkohole, Glykolether, niedere Ketone, insbesondere die mit Wasser in weiten Bereichen mischbaren organischen Lösemittel wie Butanol, Isopropanol, Methylethylketon und viele mehr, wie sie beispielsweise im "Glasurit-Handbuch Lacke und Farben", loc. cit. S. 117 - 138 beschrieben sind.

Als Additive bezeichnet man hier und im Folgenden Stoffe, die anderen, insbesondere flüssigen Stoffen in kleinen Mengen zugesetzt werden, um deren Eigenschaften in gewünschter Weise zu verändern oder deren Verarbeitung zu erleichtern. Hierzu zählen Glanz-, Netz-, Trocken-, Absetzverhinderungs-, Antiausschwimm-, Antihaut-, Verlaufs-, Trenn- und Gleitmittel sowie UV-Absorber, Biozide, Weichmacher, Antistatika, Stabilisatoren, Antioxidantien, Antiozonantien, Füllstoffe, Viskositätsverbesserer Alterungsschutzmittel, Detergentien, Dispergiermittel, Entschäumer, Erhärtungsbeschleuniger, Erhärtungsverzögerer oder Trockenstoffe, wie sie beispielsweise im "Glasurit-Handbuch Lacke und Farben", loc. cit. S. 113 - 117 beschrieben sind.

Als Flockfasern können alle üblichen Fasern verwendet werden, beispielsweise Kohlenstoff-, Glas-, Keramik-, Bor- und Synthesefasern (z. B. Aramid-, Polyamid und Polyesterfasern). Ausgeführt werden sie massiv bzw. hohl. Die Faserdurchmesser können zwischen 5 µm bis 100 µm liegen, insbesondere zwischen 10 µm bis 40 µm. Die aus der Gleitlackschicht herausragende Faserlänge kann in weiten Bereichen variieren, sie liegt üblicherweise zwischen 100 und 3.000 µm. Bevorzugterweise liegt die Länge bei PA-Fasern zwischen 700 und 1.000 µm.

Für das Verschleißverhalten sind die Faserorientierungen von großer Wichtigkeit. Als Optimum stellte sich eine Orientierung der Fasern in einem Winkelbereich zwischen ± 45 Grad zur Senkrechten der Gleitrichtung heraus. Dabei haben die einzelnen Fasern unterschiedliche Richtungen innerhalb dieses Bereichs. Dies führt zu einem optimalen Gleitverhalten bei geringem Verschleiß der Fasern. Es ist aber auch entsprechend einer ebenfalls bevorzugten Ausführungsform möglich, dass der Winkelbereich bei etwa 90 Grad zur Senkrechten der Gleitrichtung liegt, also die Flockfasern mehr oder weniger senkecht zu Substratoberfläche angeordnet sind. Diese Ausführungsform ist dann zu wählen, wenn die dämpfende Wirkung der erfindungsgemäßen Gleitbeschichtung optimiert werden soll. Auch wird der Widerstand gegen Verreibungen geringer. Der Fasergehalt (Faserdichte oder auch Belegungsdichte) liegt in den üblichen Bereichen von Flockbeschichtungen. Die Belegungsdichte ist naturgemäß abhängig von dem Durchmesser der Flockfasern. Bei einem Faserdurchmesser von 10 µm ist eine Belegungsdichte zwischen 20 bis 120 Fasern bereits völlig ausreichend. Es sind aber auch weit höhere Belegungsdichten möglich, beispielsweise wenn die Flockfasern mit einem zusätzlichen Gleitmittels belegt sind - hier sind vorzugsweise zwischen 410 bis 430 Fasern / mm² bei einem Faserdurchmesser von 22 µm sinnvoll. Bevorzugterweise gilt, dass die Belegungsdichte der erfindungsgemäßen Gleitbeschichtung zwischen 1 und 30 % der theoretischen Belegungsdichte beträgt. Bei einer Gleitbeschichtung ohne zusätzliche Belegung der Flockfasern mit einem Gleitmittel ist eine Belegungsdichte zwischen 1 und 5 % der theoretischen Belegungsdichte besonders bevorzugt. Bei einer zusätzliche Belegung der Flockfasern mit einem Gleitmittel ist hingegen eine Belegungsdichte zwischen 20 und 25 % der theoretischen Belegungsdichte besonders bevorzugt. Als theoretische Belegungsdichte wird der Wert bezeichnet, der dem Quadrat von nahtlos aneinander gereihten Flockfasern auf einem Millimeter entspicht, also dem Quadrat des Quotienten von einer Länge von 1 mm durch den Faserdurchmesser. Bei einem Faserdurchmesser von 22 µm ist der Quotient von einer Länge von 1 mm durch 22 µm gleich 45,45. Hieraus ergibt sich eine theroretische Belegungsdichte von 2.066 Fasern/mm². Zu beachten ist des Weiteren, dass höhere Faseranteile zu einem größeren Verschleißanteil von harten Fasern führen können, die wiederum den Verschleiß erhöhen.

Eine höhere Belegungsdichte führt dazu, dass die Oberfläche der Gleitlackschicht so stark bedeckt ist, dass die Fasern weniger in die in der Gleitlackschicht befindlichen Schmierstoffreservoirs eintauchen können, als bei geringerer Belegungsdichte.

Eine geringere Belegungsdichte hingegen führt zu einer veringerten Wirkung der dämpfenden Eigenschaften.

Die weiteren Ausführungsformen sind den Unteransprüchen zu entnehmen.

Zu beachten ist, dass für den Fall, in dem der Gleitfilm eine reibwertreduzierende Substanz enthält, auch alle geeignete Flüssigkeiten genommen werden können, da alleine der Flüssigkeitsfilm auf der Flockfaseroberfläche zu einer erheblichen Reibwertreduzierung beiträgt.

Es ist aber auch möglich, dass der Gleitlack zusätzlich übliche Füll- und Verstärkungsstoffe aufweist. Diese haben bekanntermaßen einen Einfluss auf das tribologische Verhalten der ausgehärteten und/oder vernetzten Gleitlackschicht, welches bereits ausführlich in der Literatur beschrieben ist.

Die erfindungsgemäßen Gleitbeschichtungen werden vor allem zur geräuschdämpfenden und reibungskoeffizientenmindernden Beschichtung verwendet, insbesondere bei toleranzbehafteten Gleitverbindungen, wie z.B. bei Schiebeverbindungen (wie Linearlager, Schraubenfeder in Hülsen, Druckfedern, Zugfedern, Federstützen, Anschläge, Vorrichtungen mit Stoßlasten, Dämpfelemente, Lager (trocken), Lagerbuchsen (trocken), Abroll-/Transporteinrichtungen, Schließsysteme, Verriegelungen, verschiebliche Auflagen und Transportrollen und -walzen. Sie werden gemäß der folgenden Versuchbestimmungen untersucht:

### Allgemeine Verfahrensbeschreibung

### Arbeitsschritte:

Auf die zu beflockenden Bereiche wird zunächst Gleitlack aufgebracht. Direkt anschließend wird der Flock in den nassen Klebstoff eingeschossen. Dies geschieht meist mit einem elektrostatischen Handbeflockungsgerät oder einer elektrostatischen Beflockungsanlage. In Spezialfällen werden jedoch auch andere Verfahren eingesetzt, z.B. elektrostatisch-pneumatische Flockanlagen für Hohlkörper. Das Teil wird dann an der Luft oder im Ofen getrocknet und zuletzt von überschüssigem Flock gereinigt.

### Gleitlackauftrag:

Der Gleitlackauftrag ist vergleichbar mit einer Lackierung und kann mit allen Methoden erfolgen, die auch für Lack üblich sind, d. h. Streichen, Walzen, Spritzen, Rakeln u.ä. Ein Gleitlackauftrag auf Bereiche, die nicht beflockt werden sollen, ist hierbei unter allen Umständen zu vermeiden. Notfalls müssen solche Flächen mit einer Schablone abgedeckt oder mit Klebeband abgeklebt werden. Der Untergrund muss so beschaffen sein, dass der Gleitlack nicht eingesaugt wird. Bei porösen Untergründen (z.B. Holz, Spanplatten etc.) muss deshalb vor dem Klebstoffauftrag eine Grundierung aufgebracht werden, welche die Poren sicher verschließt. Wird dieser Punkt nicht beachtet, dann dringt der Flockklebstoff während des Trocknungsvorgangs in das Grundmaterial und der Flock an der Oberfläche wird nur mangelhaft verankert, d. h. bei der Endreinigung treten kahle Stellen auf.

Nach dem Gleitlackauftrag beginnt der Lack zu trocknen. Hierbei wird er an der Oberfläche immer zäher, bis sich eine Haut bildet. Bereits wenn die Oberfläche zäher geworden ist, schießen Flockfasern nicht mehr so tief wie gewünscht ein, d.h. die Beflockung wird nicht mehr abriebbeständig. Die Beflockung ist deshalb nur so lange möglich, wie der Klebstoff an der Oberfläche noch nicht durch Verdunstung von Wasser oder Lösungsmittel zäher geworden ist. Die Zeit, in der die Beflockung abgeschlossen sein muss, wird offene Zeit genannt. Bei der Auswahl eines Flockklebstoffes/ Gleitlackes muss deshalb je nach Teilegröße und Beflockungsmethode ein Klebstoff mit entsprechend offener Zeit gewählt werden. Zweikomponentige Systeme fangen unabhängig von der Verdunstung von Wasser oder Lösungsmitteln an, miteinander zu reagieren. Auch hierdurch steigt die Viskosität des Klebstoffes an und eine Beflockung ist nicht mehr möglich. Die Zeit, in der ein zweikomponentiger Klebstoffansatz verarbeitet werden muss, wird Topfzeit genannt.

### Beflockung:

Der eigentliche Beflockungsvorgang erfolgt mit einem elektrostatischen Beflockungsgerät. Dieses lädt die Flockfasern auf eine Spannung von 20-90 kV, insbesondere von 40 - 60 kV, auf. Die Flockfasern springen dadurch vom Gerät entlang der elektrostatischen Feldlinien zu jeder geerdeten Fläche. Üblicherweise werden metallische Substrate direkt geerdet. Nicht metallische Substrate, z.B. solche aus Kunststoff, werden mit einem erdungsfähigen (metallischen) Material hinterlegt, um so den gewünschten Einschuß und -winkel der Flockfasern zu gewährleisten. Voraussetzung für eine gute und gleichmäßige Beflockung ist daher, dass das Teil bzw. der Klebstofffilm mit dem Erdungskabel des Beflockungsgerätes verbunden ist. Hierzu ist u.U. eine kleine Hilfskonstruktion notwendig, z. B. das Einschlagen eines Nagels an einer später nicht sichtbaren Stelle (Kontakt des Nagels mit dem Klebstoff und Verbindung des Nagels mit dem Erdungskabel) oder ein Benetzen eines Klebstreifens an einer Randfläche mit Klebstoff und Kontakt dieses Klebstreifens mit dem Erdungskabel. Die Wirkung des elektrostatischen Feldes ist abhängig von der Feldstärke. Diese ergibt sich aus der im Gerät anliegenden Spannung, dividiert durch den Abstand des Applikators zum beflockten Teil. Für eine gleichmäßige Beflockung ist es deshalb notwendig, das Gerät in stets gleich bleibendem Abstand (meist 5-30 cm) über die Oberfläche zu führen. Dies ist vor allem bei Vertiefungen und hervorstehenden Kanten zu beachten, da es sonst Probleme mit der Gleichmäßigkeit der Beflockung geben kann. Die perfekte Beflockung kompliziert geformter Teile erfordert ein gewisses Maß an Erfahrung und sollte deshalb nur von geübten Fachkräften durchgeführt werden.

### Trocknung und Reinigung:

Das beflockte Teil wird an der Luft oder zur schnelleren Trocknung in einem Ofen getrocknet und anschließend von überschüssigem Flock gereinigt. Das Reinigen kann durch Abblasen, Absaugen, Abklopfen, Abbürsten oder Waschen geschehen. Meist wird eine Kombination mehrerer Methoden angewendet.

### Beispiel 1 (erfindungsgemäß)

Herstellung der Komponente A:
Die Rohstoffe Position 1-3 werden unter ständigem Rühren in einen 1I Behälter vorgelegt, bis eine pastöse Masse entsteht. Anschließend wird das Hostaflon TF 9205 PTFE (Pos.4) zugegeben und untergerührt. Hiernach gibt man das MoS₂ (Pos. 5) zu und rührt so lange, bis eine Paste ohne mit dem Auge sichtbare Klümpchen entsteht. Sind die Feststoffe untergerührt, wird mit einem Spachtel an den Wandungen des Behälters und am Rührwerk anhaftende Feststoffe abgelöst (der Dissolver wird hierbei abgestellt). Anschließend wird die Mahlpaste noch 3 Minuten dispergiert. (1.200 U/min bei 70 mm Scheibe, 1000 U/min 80 mm Scheibe (Umfangsgeschwindigkeit 250 m/s). Durch den Dispergiervorgang erwärmt sich die Paste.
Die Temperatur soll 40 Grad Celsius nicht überschreiten. Nach diesem Dispergiervorgang wird das restliche Wasser portionsweise zugegeben (Pos.6) und gerührt bis eine homogene Dispersion entsteht.

| **Position** | **Menge in g** | **Rohstoff** | **Lieferant** |
|---|---|---|---|
| 1 | 7,93 | Beckopox-Spezialhärter 623 w | Cytec |
| 2 | 12,23 | Deionisiertes Wasser | |
| 3 | 1,5 | Byk 381 | Byk |
| 4 | 6,34 | Hostaflon TF 9205 | Dyneon |
| 5 | 7,93 | Mos2 | Fa. WTH (10/J) |
| 6 | 15,35 | Deionisiertes Wasser | |
| 7 | 51,28 | Gesamtmasse | |

### Herstellung der Komponente B:

Die Komponente B wird gebrauchsfertig geliefert.

| **Position** | **Menge in g** | **Rohstoff** | **Lieferant** |
|---|---|---|---|
| 8 | 39,63 | Beckopox 384 w | Cytec |
| 9 | 9,09 | Beckopox EP 147w | Cytec |

### Herstellung des Gleitlacks:

Die Komponenten A und B werden in folgender Menge gemischt:
**A: 51,28**
**B: 48,72**
Die Verarbeitungszeit beträgt max. 3 Stunden.

Der Gleitlack wird wie zuvor beschrieben auf das zu beschichtende Substrat aufgebracht. Dann wird der Flock (3,3 dtex PA Flock (Faserdurchmesser 22 µm), Schnittlänge 0,7 mm, schwarz, Fa. Swissflock) wie unter "Arbeitsschritte" beschrieben aufgebracht.

### Beispiel 2: (Vergleichsversuch):

Das Beispiel 1 wird wiederholt, jedoch ohne die Positionen 4 und 5.

### Beispiel 3: (Vergleichsversuch):

Als Kleber wird ein handelsüblicher Kleber KIWO L 844 der Fa. Kiwo verwendet und mit dem Flock entsprechend der zuvor genannten Beispiele beflockt.

### Beispiel 4: (erfindungsgemäß):

Das Beispiel 1 wird wiederholt. Die so erhaltene Gleitbeschichtung wird zusätzlich mit einem Gleitfilm aus pulverförmigem PTFE belegt, indem HOSTAFLON 9205 Pulver mit einem Sieb fein verteilt auf die Flockoberfläche aufgebracht und mit einem Bürstenpinsel eingestrichen und gleichmäßig verteilt wird.

Eine Belegung der Flockfasern mit einem zusätzlichen Gleitmittel bewirkt gewissermaßen eine Imprägnierung der Flockfasern. Überraschenderweise haben die Versuche gezeigt, dass eine einfache Imprägnierung der Flockfasern mit einem feinferteilten Festschmierstoff gegenüber mechanischer Belastung erstaunlich widerstandsfähig ist: Es ist so gut wie keine bedeutende Verringerung der Belegung der Flockfasern an Festschmierstoffen auch nach längerer Versuchsdauer zu beobachten.

### Pin-Disk-Test:

Die Untersuchung erfolgt in Anlehnung an die DIN 50 234, wobei jedoch mit einer Kraft von 5 N (anstatt 10 N) gearbeitet wird. Die Gleitbeschichtungen der Beispiele 1 bis 3 werden dem Pin-Disk-Test (oder auch "Kugel-Scheibe-Prüfung") unterzogen. Die Ergebnisse sind in der folgenden Tabelle wiedergegeben:
Die Messungen wurden durchgeführt mit der Maßgabe, dass die Anzahl an Umdrehungen zu ermitteln sind, bis der Anstieg des Gleit- Reibkoeffizienten auf Werte über 0,35 ansteigt. Danach wird der Verschleiß der Kugel und der der Scheibe bestimmt.

| **Beispiel** | **Umdrehungszahl** | **Mittlerer Reibwert** | **Verschleiß Kugel** | **Verschleiß** |
|---|---|---|---|---|
| | Y < 0,35 | [*f*] | [X10⁻¹⁵ m²/N] | **Scheibe** |
| | | | | [x10⁻¹⁵ m²/N] |
| 1 | 127 926 | 0,19 | 1,9 | 47,0 ±2,5 |
| 2 | 11 226 | 0,35 | kein Verschleiß | nicht messbar |
| 3 | 40 920 | 0,22 | kein Verschleiß | nicht messbar |
| 4 | 1 067 598 | 0,16 | kein Verschleiß | nicht messbar |

Zu beachten ist bei dem erfindungsgemäßen Beispiel 1 eine überragende Umdrehungszahl, obwohl der zu überschreitende Reibwert von 0,35 noch gar nicht erreicht wurde. Gleiches gilt für das erfindungsgemäße Beispiel 4, dass die Werte der erfindungsgemäßen Gleitbeschichtung ohne zusätzlichen Gleitfilm deutlich übertrifft. Dies ist insofern überraschend, als der locker auf dem Flock verteilte Festschmierstoff PTFE nicht durch die mechanischen Berührungen mit der Kugel entfernt wird, sondern auch nach einer beachtlichen Anzahl von Umdrehungen immer noch im Bereich der Flockfasern aufzufinden ist.

### Beschreibung der Abbildungen:

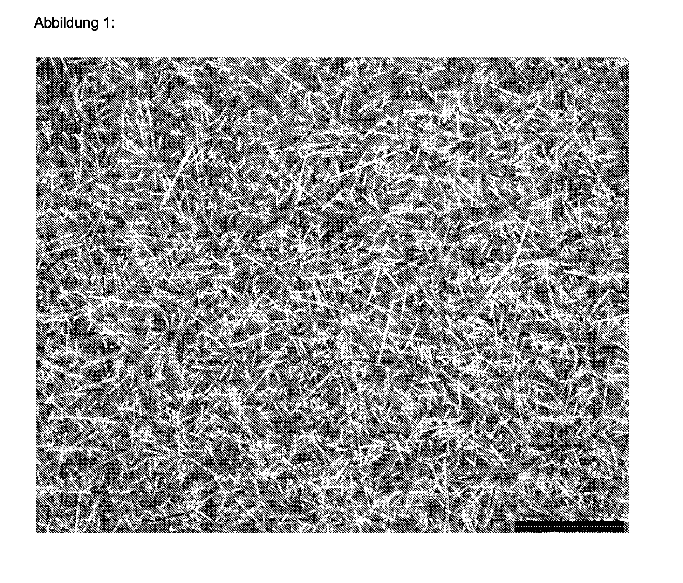

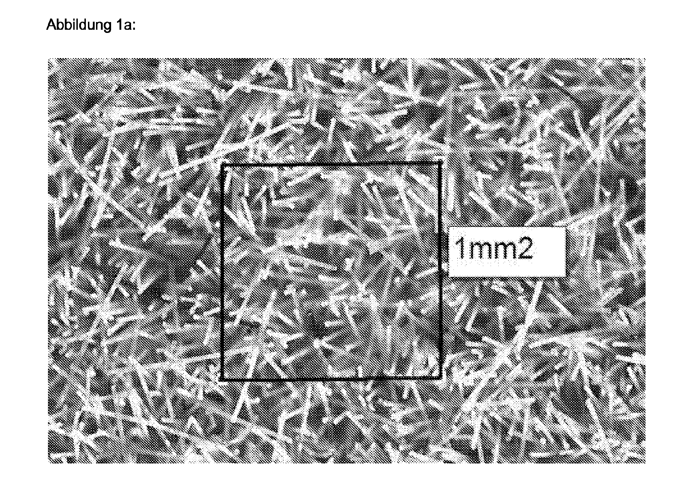

**Abbildung 1** zeigt eine lichtmikroskopische Aufsicht auf die beflockte Oberfläche gemäß Beispiel 1 (erfindungsgemäß), die nach dem Zählen der Fasern auf dem markierten Quadrat von 100 * 100 µm eine Flockdichte von 97 Fasern / mm² bestimmt wurde.

Die Zählung der Fasern kann beispielsweise so erfolgen, dass der zu zählende Bereich bis auf die Gleitlackschicht abgeschliffen wird und die in der Gleitlackschicht steckenden Flockstümpfe in einem definierten Bereich gezählt werden.
**Abbildung 1a** ist eine Vergrößerung der Abbildung 1

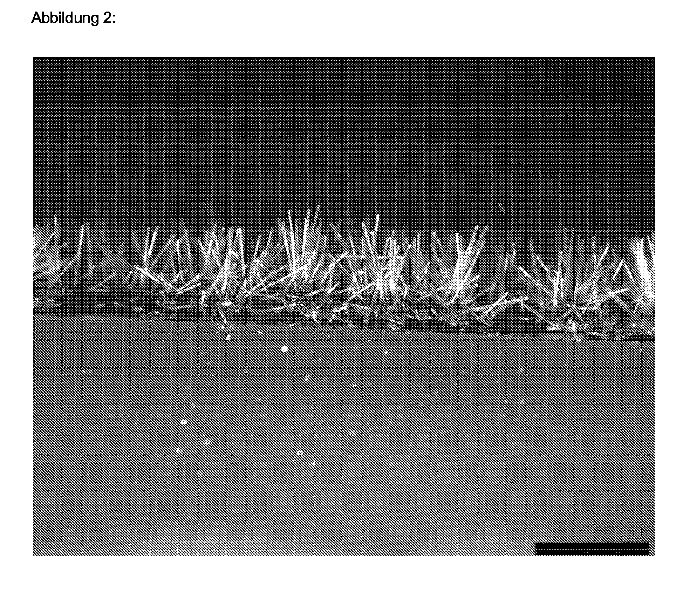

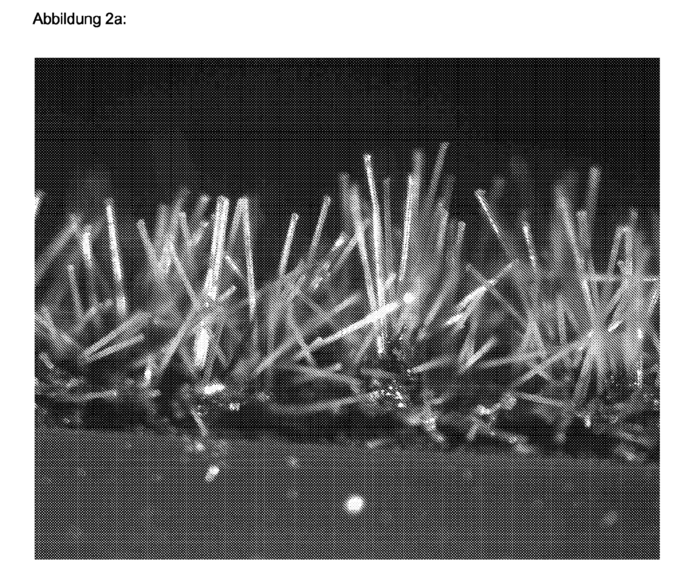

**Abbildung 2** zeigt eine lichtmikroskopische Abbildung des Querschliffs der Oberfläche der Abbildung 1. Deutlich zu sehen sind die unterschiedlichen Richtungen der Flockfasern, die bündelartig in den Gleitlack eingeschossen sind.
**Abbildung 2a** ist eine Nahaufnahme der Abbildung 2.

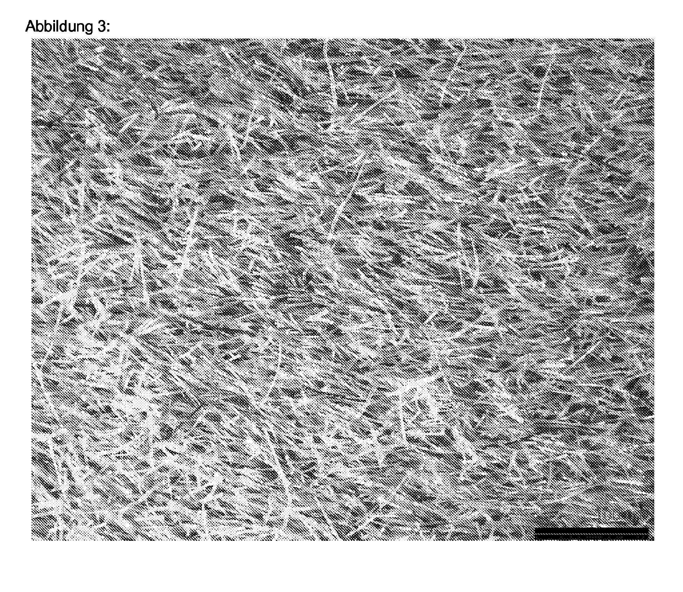

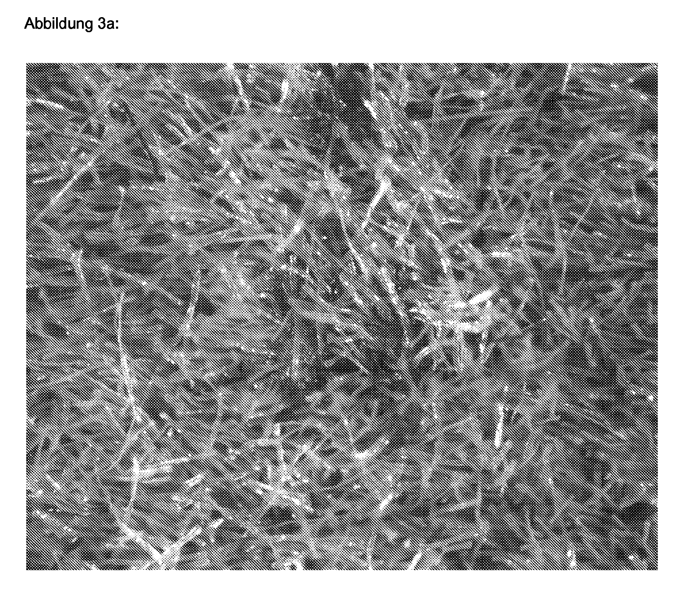

**Abbildung 3** zeigt eine erfindungsgemäße Gleitflockbeschichtung nach Belastung mit 50 Hüben mit einem Gewicht von 500 g. Deutlich sichtbar sind die Silber glänzenden Nester (Reservoirs), die die Festschmierstoffe an die Fasern abgeben.
**Abbildung 3a** zeight eine Nahaufnahme der Abbildung 3. Deutlich sichtbar sind die auf den Fasern befindliche Festschmierstoffe.

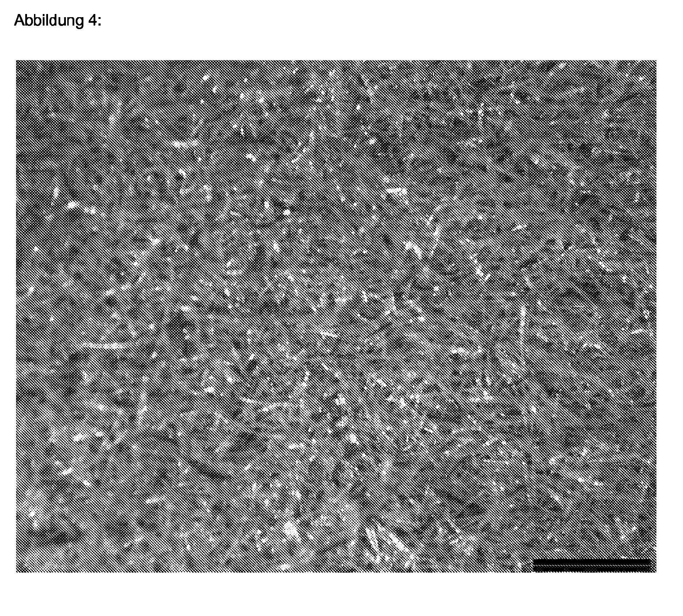

**Abbildung 4** zeigt eine nicht erfindungsgemäße Gleitflockbeschichtung gemäß Beispiel 2 nach der gleichen Belastung wie Abbildung 3 (d.h. nach Belastung mit 50 Hüben mit einem Gewicht von 500 g). Zu sehen sind die zerstörten Fasern, die zerquetscht bzw. zerkräuselt sind, die gerade Struktur der Fasern ist zerstört.

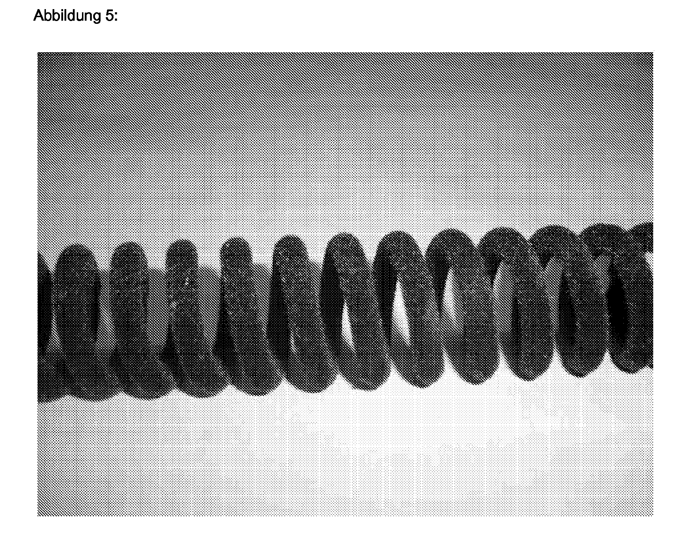

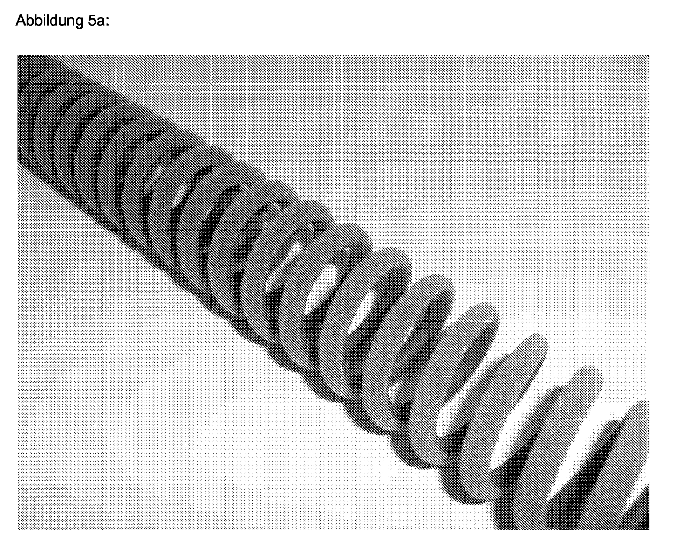

**Abbildung 5** zeigt eine fertig beschichtete Druckfeder aus einem Kofferraumöffner.
**Abbildung 5a** zeigt eine fertig beschichtete Druckfeder aus einem Kofferraumöffner mit nicht beflockten Bereichen, d.h. die Feder hat Bereiche ohne Gleitlackauftrag. Die mit mit Flock versehene Gleitbeschichtung im erfindungsgemäßen Sinne ist also nur teilweise auf das Substrat aufgebracht.

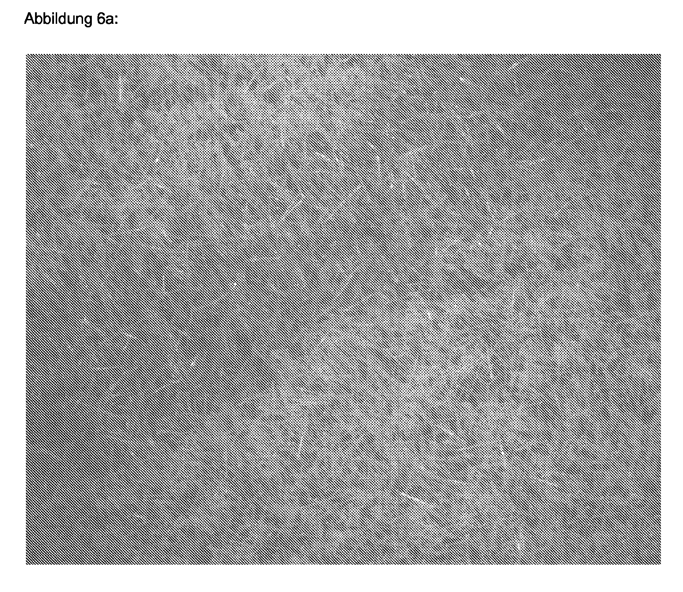

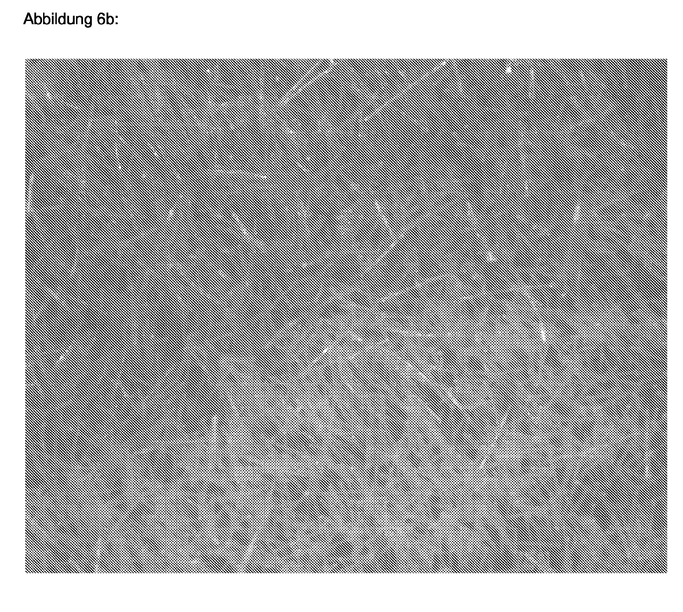

**Abbildungen 6** zeigen eine erfindungsgemäße Gleitbeschichtung vo der Durchführung des Pin-Disk-Tests, also den unbelasteten Flock. **Abbildung 6b** ist eine Vergrößerung der **Abbildung 6a****.**

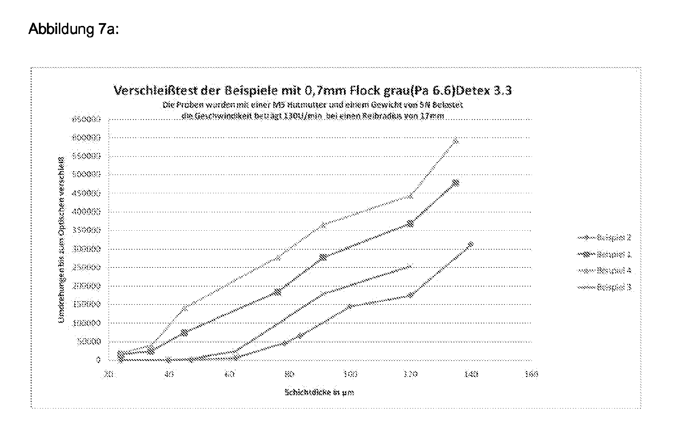

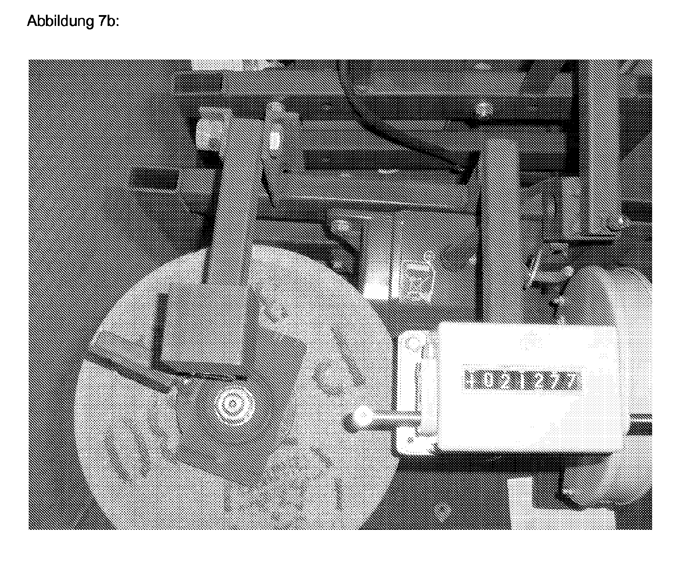

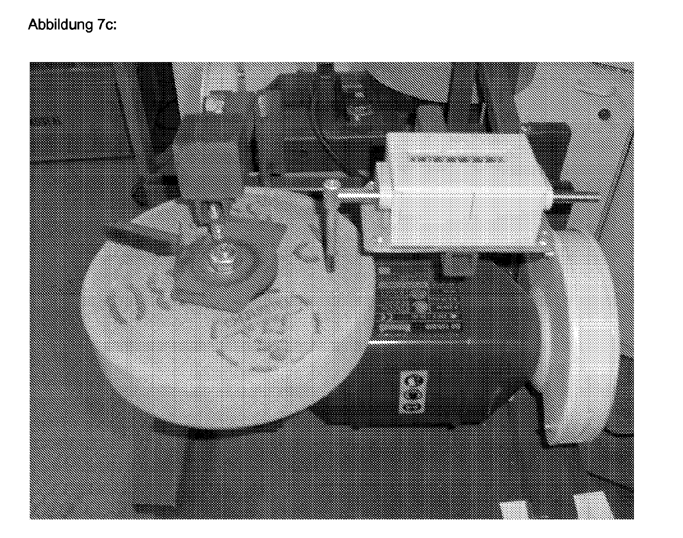

**Abbildungen 7a** zeigt die Ergebnisse des Pin-Disk-Tests der Beispiel 1 bis 4 in graphischer Darstellung, wobei **Abbildung 7b** und **Abbildung 7c** die für die Untersuchungen des Pin-Disk-Tests in Anlehnung an die DIN 50 234 verwendete Vorrichtung darstellen. Zu beachten ist, dass die erfindungsgemäßen Beispiele 1 und 4 gegenüber den Vergleichsversuchen 2 und 3 bereits ab einer Schichtdicke von 30 µm zu einer signifikanten Erhöhung der Verschleißfestigkeit führen, die bei den Vergleichsversuchen erst ab einer Schichtdicke von 60 µm auszumachen ist.

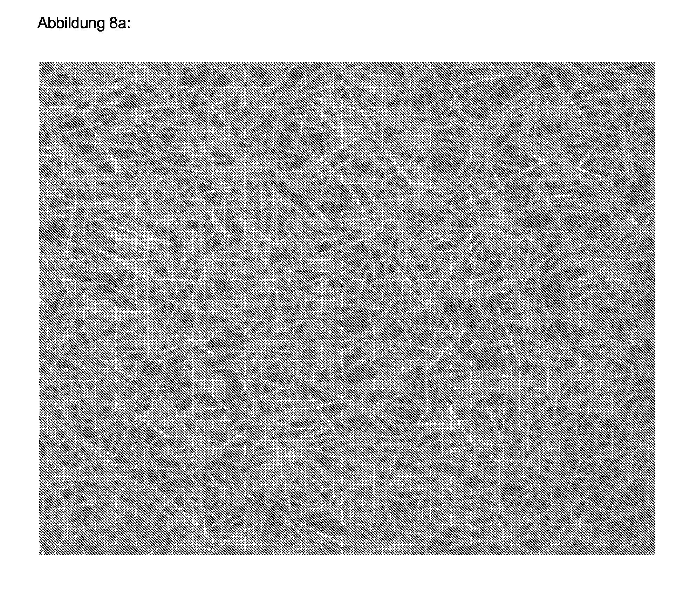

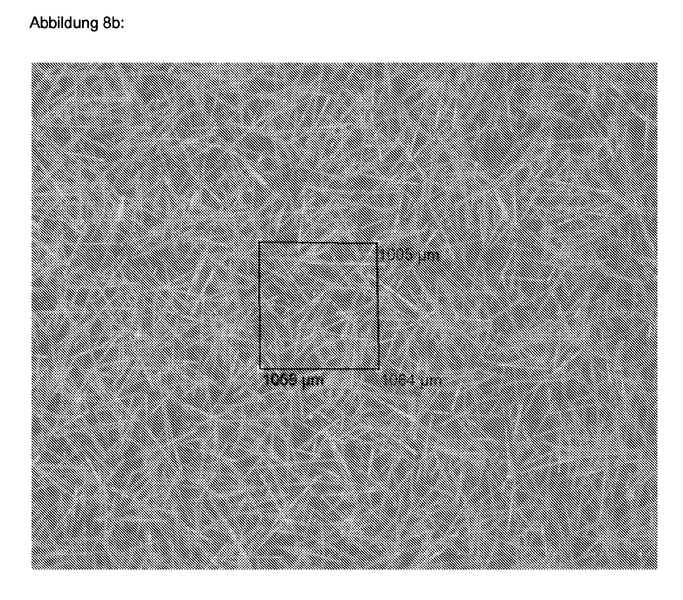

**Abbildungen 8** zeigen zwei Beschichtungen gemäß Beispiel 1, wobei in **Abbildung 8a** das Bauteil geerdet worden ist und das Bauteil gemäß **Abbildung 8b** hingegen nicht. In **Abbildung 8a** sind 30 Faserenden pro 1 mm² zu finden, in **Abbildung 8b** nur 6 Faserenden pro 1 mm². Deutlich zu erkennen ist, dass die Fasern in **Abbildung 8b** einen flacheren Winkel aufweisen, als in **Abbildung 8a****,** und weniger ausgerichtet sind.

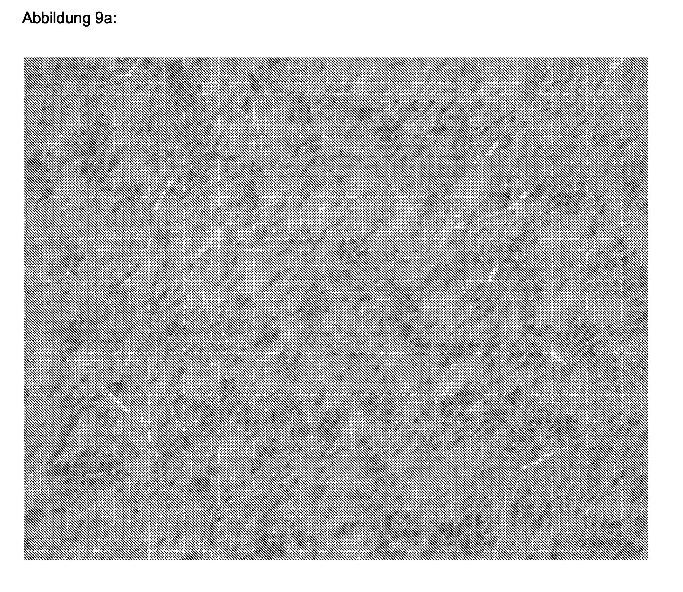

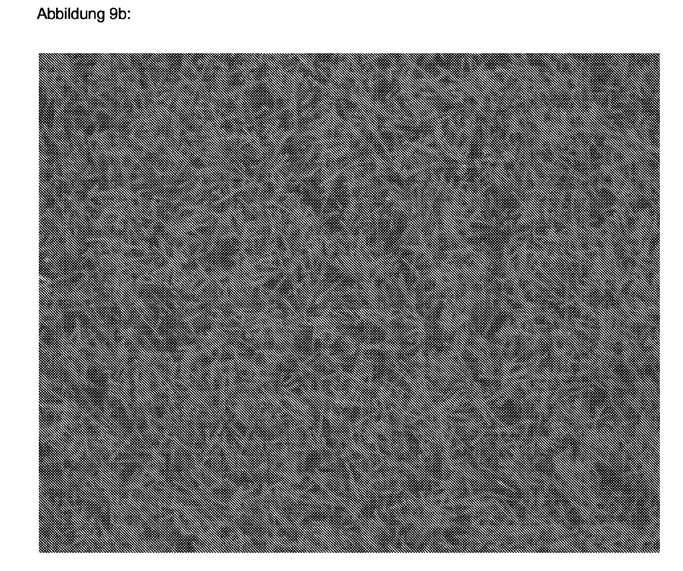

**Abbildungen 9** zeigen den Einfluß zwischen reiner elektrostatischer und elektropneumatischer Beschichtung - die Versuche wurden mit einem Abstand zwischen Applikator und zu beschichtendem Werkstück von 5 cm bei einer Spannung von 60 kV gemacht: **Abbildung 9a** zeigt die Flockfasern der efindungsgemäßen Gleitbeschichtung mit reiner elektrostatischen Beschichtung - der Faserwinkel liegt zwischen 80 - 90° bei einer sehr hohen Flockdichte. In **Abbildung 9b** wird zusätzlich der Flock zusätzlich mit einem Luftstrom aufgebracht, die Flockdichte ist geringer als in **Abbildung 9a****,** der Faserwinkel liegt ebenfalls zwischen 80 - 90°.

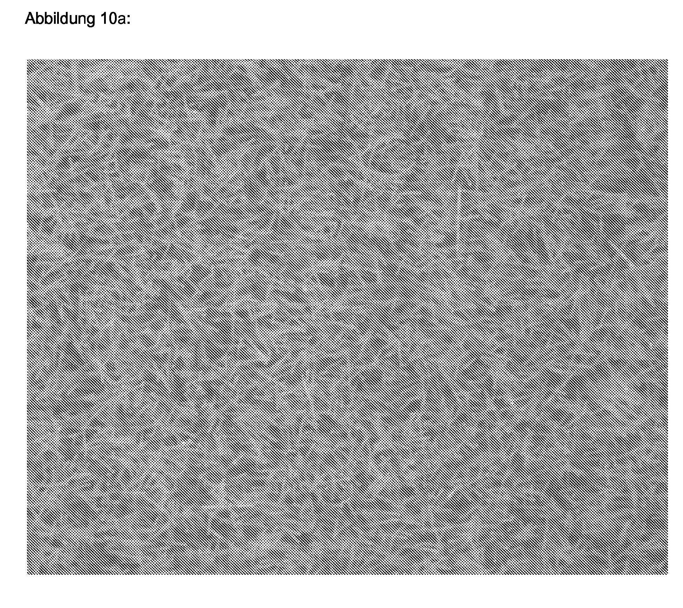

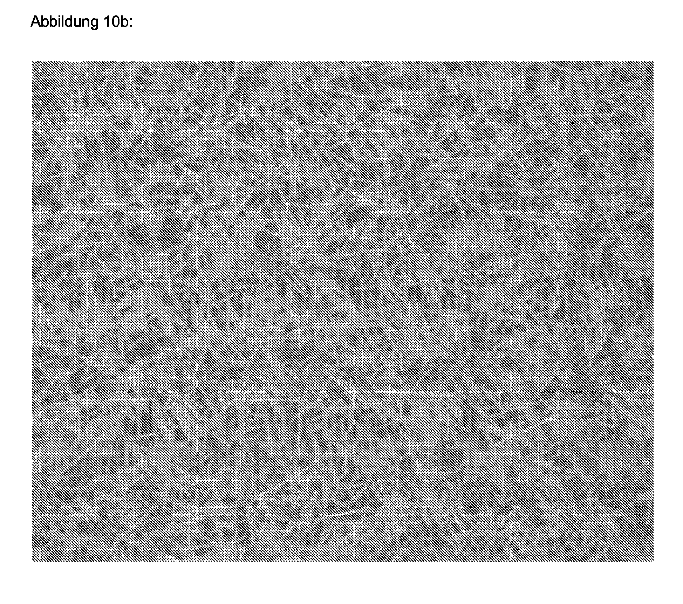

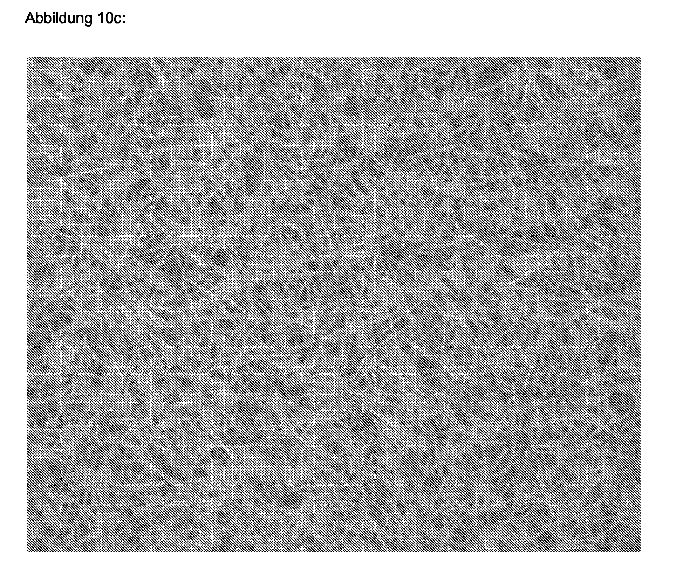

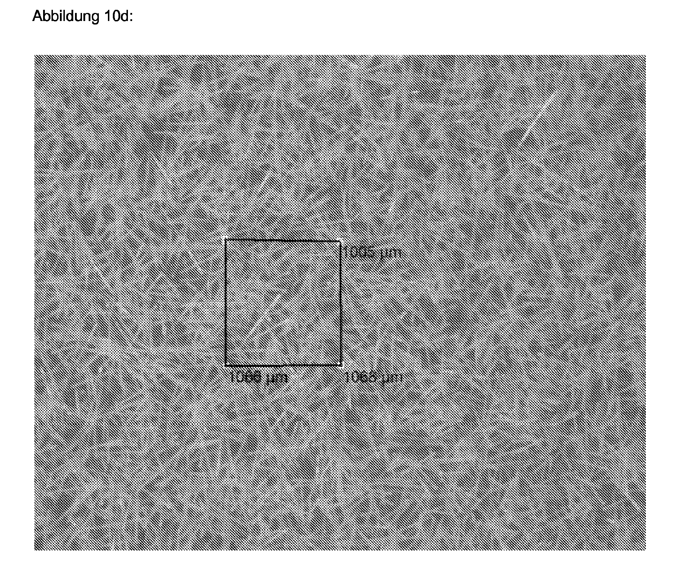

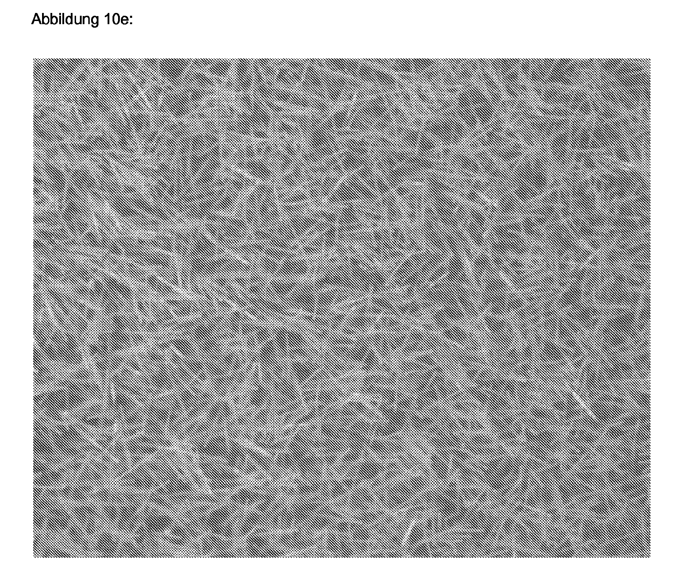

**Abbildungen 10** zeigen den Einfluß unterschiedlicher Abstände zwischen Applikator und zu beschichtendem Werkstück bei einer Spannung von 80 kV bei der Herstellung einer Gleitbeschichtung gemäß Beispiel 1: Bei der Gleitbeschichtung gemäß **Abbildung 10a** hat der Abstand 5 cm betragen, bei **Abbildung 10b** 10 cm, bei **Abbildung 10c** 15 cm, bei **Abbildung 10d** 30 cm und bei **Abbildung 10e** 40 cm. Deutlich ist zu erkennen, dass ein größerer Abstand zwischen Applikator und zu beschichtendem bzw. zu beflockendem Substrat einen flacheren Winkel der Fasern bewirkt: In **Abbildung 10a** liegt der Faserwinkel bei ca. 80°, in **Abbildung 10e** nur noch bei ca. 45°.

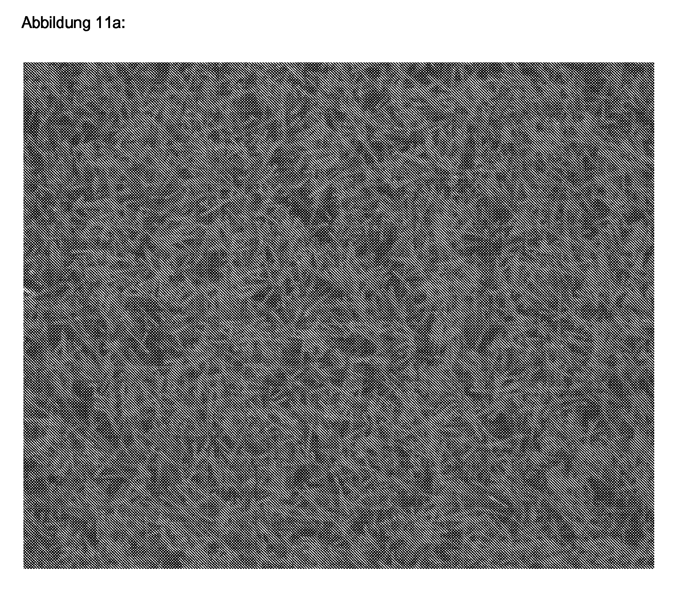

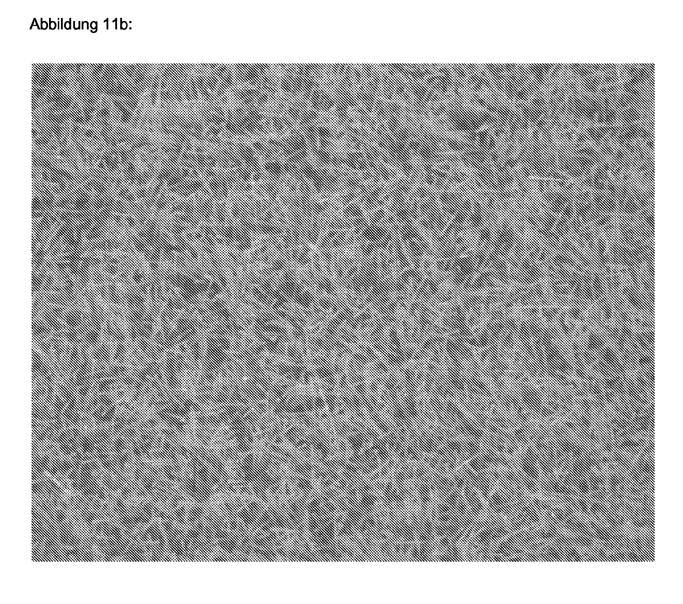

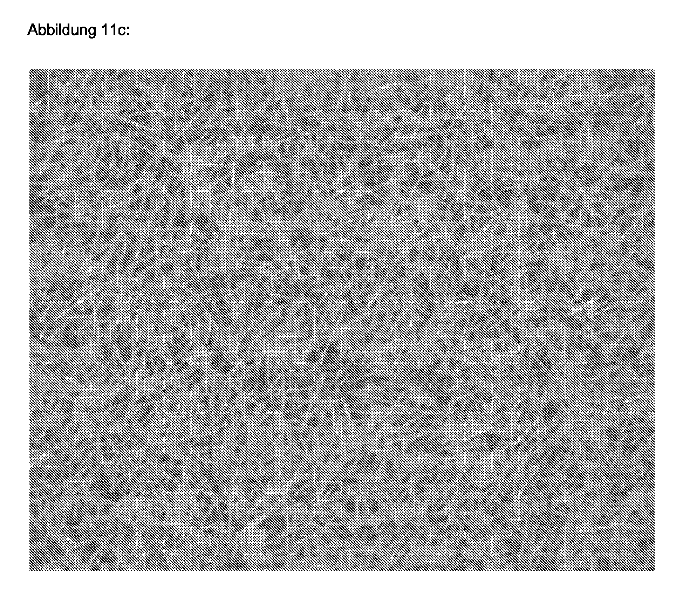

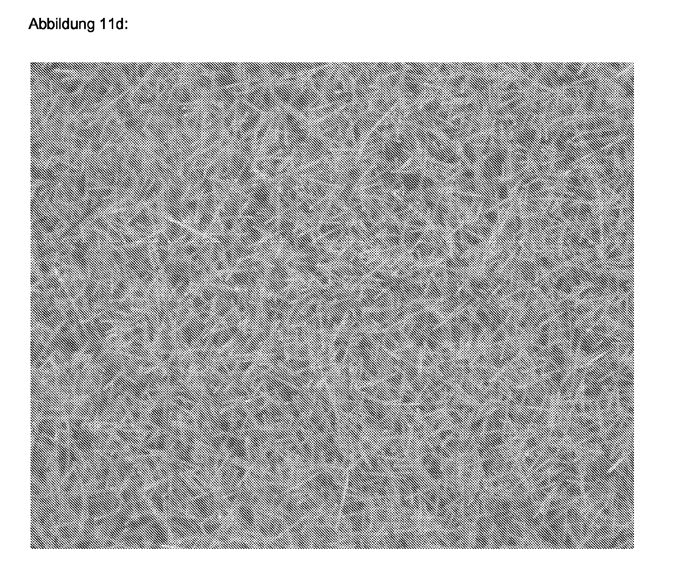

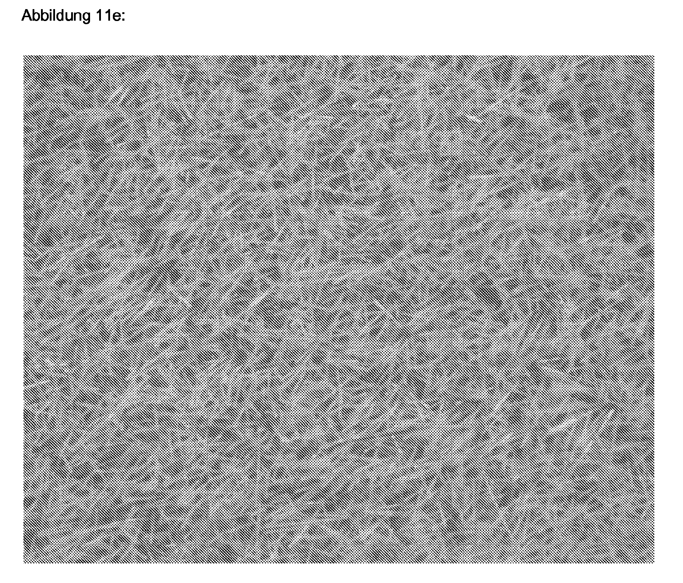

**Abbildungen 11** zeigen den Einfluß unterschiedlicher Luftbeimischungen bei gleichbleibender Flock-Dosierung bei der elektropneumatischen Beflockung gemäß Beispiel 1: Die Gleitbeschichtung gemäß **Abbildung 11a** wird mit einer Gebläsestufe von 2 erhalten, die gemäß **Abbildung 11b** bei einer Stufe von 4, die gemäß **Abbildung 11c** bei einer Stufe von 6, die gemäß **Abbildung 11d** bei einer Stufe von 8 sowie die gemäß **Abbildung 11e** bei einer Stufe von 10. Deutlich zu erkennen ist der Einfluß der Pneumatik auf den Faserwinkel, der von ca. 90° (**Abbildung 11a****)** auf weniger als 45° **(****Abbildung 11e****)** herunter geht.

## Patentansprüche

1. Gleitbeschichtung zur geräuschdämpfenden und reibungskoeffizientenmindernden Beschichtung, **dadurch gekennzeichnet, dass** die Gleitbeschichtung aus einer Gleitlackschicht mit darin eingebetteten Flockfasern besteht und dass die Gleitlackschicht unter Reibpaarung kontinuierlich Schmierstoffe freisetzt.

2. Gleitbeschichtung nach Anspruch 1, **dadurch gekennzeichnet, dass** die Länge der aus der Gleitlackschicht herausragenden Flockfasern zwischen 100 und 3.000 µm, insbesondere zwischen 250 und 900 µm, ganz besonders bevorzugt zwischen 400 und 600 µm, beträgt.

3. Gleitbeschichtung nach einem der vorhergehenden Ansprüche, **dadurch gekennzeichnet, dass** die Dicke der ausgehärteten und/oder vernetzten Gleitlackschicht höchstens 150 µm, insbesondere höchstens 120 µm, beträgt.

4. Gleitbeschichtung nach einem der vorhergehenden Ansprüche, **dadurch gekennzeichnet, dass** die Dicke der ausgehärteten und/oder vernetzten Gleitlackschicht mindestens 20 µm, insbesondere mindestens 30 µm, beträgt.

5. Gleitbeschichtung nach einem der vorhergehenden Ansprüche, **dadurch gekennzeichnet, dass** die Gleitlackschicht erhältlich ist durch Aufbringen und Trocknung, Aushärten und/oder Vernetzten eines Gleitlacks, der mindestens ein Lösemittel, mindestens eine zur Trocknung, Aushärtung und/oder Vernetzten geeignete Substanz und mindestens einen Schmierstoff enthält.

6. Gleitbeschichtung nach Anspruch 5, **dadurch gekennzeichnet, dass** die zur Trocknung, Aushärtung und/oder Vernetzten geeignete Substanz ein Polymer ist, insbesondere ein Polymer auf Basis eines Epoxyharzes, eines Polyesters oder eines Polyurethans.

7. Gleitbeschichtung nach Anspruch 5 oder 6, **dadurch gekennzeichnet, dass** die der Schmierstoff eine Trockenschmierstoff ist, insbesondere ausgewählt aus der Gruppe von Molybdändisulfid, Graphit und Polytetrafluorethylen.

8. Gleitbeschichtung nach einem der Ansprüche 5 bis 7, **dadurch gekennzeichnet, dass** der Schmierstoff in dem Gleitlack homogen verteilt ist.

9. Gleitbeschichtung nach einem der Ansprüche 5 bis 7, **dadurch gekennzeichnet, dass** der Schmierstoff in dem Gleitlack eine Gradientenverlauf aufweist, wobei die Konzentration des Schmierstoffes in Richtung der Oberfläche des Gleitlacks zunimmt.

10. Gleitbeschichtung nach einem der vorhergehenden Ansprüche, **dadurch gekennzeichnet, dass** die Flockfasern zusätzlich mit einem Gleitfilm belegt sind.

11. Gleitbeschichtung nach einem der vorhergehenden Ansprüche, **dadurch gekennzeichnet, dass** der Gleitfilm ein reibwertreduzierende Substanz, wie beispielsweise ein Öl, Fluorpoymer oder Festschmierstoffe enthält.

12. Gleitbeschichtung nach Anspruch 10 oder 11, **dadurch gekennzeichnet, dass** der Gleitfilm zusätzlich mindestens ein Additiv, Vernetzungshilfsmittel, Dispergierhilfsmittel, einen Weichmacher und/oder Compounds enthält.

13. Gleitbeschichtung nach einem der Ansprüche 10 bis 12, **dadurch gekennzeichnet, dass** der Gleitfilm erhältlich ist durch eine Einlaufphase einer Gleitbeschichtung nach einem der Ansprüche 1 bis 9 mit einem Reibpartner, dessen der den Flockfasern zugewandte Oberfläche mit einer Gleitsubstanz belegt ist.

14. Gleitbeschichtung nach einem der Ansprüche 10 bis 13, **dadurch gekennzeichnet, dass** die mit dem Gleitfilm belegten Flockfasern zusätzlich einen Trockenschmierstoff aufweisen.

15. Gleitbeschichtung nach Anspruch 14, **dadurch gekennzeichnet, dass** der Trockenschmierstoff ausgewählt ist aus der Gruppe von Molybdändisulfid, Graphit, Fluorpolymeren (z.B, Polytetrafluorethylen - PTFE, Perfluoralkoxyalkan - PFA), Bornitrid, Wolframdisulfit und Zinnsulfit.

16. Gleitbeschichtung nach einem der vorhergehenden Ansprüche, **dadurch gekennzeichnet, dass** die Gleitbeschichtung Bereiche ohne Gleitlackauftrag aufweist, die nicht beflockt sind.

17. Verwendung einer Gleitbeschichtung nach einem der vorhergehenden Ansprüche als geräusch- und reibungskoeffizientenmindernden Beschichtung bei toleranzbehafteten Gleitverbindungen, insbesondere bei Schiebeverbindungen (wie Linearlager, Schraubenfeder in Hülsen, Druckfedern, Federstützen, Anschläge, Vorrichtungen mit Stoßlasten, Dämpfelemente, Lager (trocken), Lagerbuchsen (trocken), Abroll-/Transporteinrichtungen, Schließsysteme, Verriegelungen, verschiebliche Auflagen und Transportrollen und -walzen.
